# EUROPÄISCHE PATENTSCHRIFT

(11) **EP 2 501 604 B1**
(45) Veröffentlichungstag und Bekanntmachung des Hinweises auf die Patenterteilung: **21.03.2018**
(21) Anmeldenummer: 10779808.4
(22) Anmeldetag: 18.11.2010
(51) Int. Cl.: B62D 35/02, B60K 13/04, F01N 3/023

(54) **VERKLEIDUNGSBAUTEIL FÜR DIE UNTERSEITE EINES KRAFTFAHRZEUGES**
LINING COMPONENT FOR THE UNDERSIDE OF A MOTOR VEHICLE
COMPOSANT D'HABILLAGE POUR LA PARTIE INFÉRIEURE D'UN VÉHICULE AUTOMOBILE

(30) Priorität: 20.11.2009 DE 102009054091
(43) Veröffentlichungstag der Anmeldung: 26.09.2012
(73) Patentinhaber: Bayerische Motoren Werke Aktiengesellschaft, 80809 München (DE)
(72) Erfinder: DIMITRIOU, Ioannis, 85417 Marzling (DE); HAYES, Peter, 86567 Hilgertshausen (DE); EICHENTOPF, Marcel, 85375 Neufahrn (DE); SEITZ, Christian, 85774 Unterföhring (DE)
(86) Internationale Anmeldenummer: PCT/EP2010/067741
(87) Internationale Veröffentlichungsnummer: WO 2011/061251

(56) Entgegenhaltungen:
- EP-A1- 1 514 772
- EP-A1- 1 514 772
- DE-A1- 10 137 175
- DE-A1-102006 008 224
- DE-A1-102008 058 993
- FR-A1- 2 864 512

## Beschreibung

Die Erfindung betrifft ein Kraftfahrzeug nach dem Oberbegriff des Anspruchs 1.

Aus der JP 07-215074 A ist ein gattungsgemäßes Verkleidungsbauteil bekannt, das im Mittenbereich des Unterbodens eines Kraftfahrzeugs angeordnet ist und eine etwa im Bereich des Mitteltunnels verlaufende Abgasanlage auf einem wesentlichen Teil ihrer Längserstreckung abdeckt. Das bekannte Verkleidungsbauteil weist eine Vielzahl von Einlassöffnungen auf, die teilweise oder vollständig verschlossen werden können. Hierzu schlägt die JP 07-215074 A vor, das Verkleidungsbauteil als eine erste Platte mit einer Mehrzahl hintereinander angeordneter Schlitze oder mit einer Mehrzahl hintereinander und nebeneinander angeordneter runder Öffnungen auszubilden, wobei parallel zu dieser geschlitzten bzw. gelochten Platte eine zweite Platte vorgesehen ist, mit gleichermaßen angeordneten Schlitzen bzw. Löchern. Durch eine Verschiebung der zweiten Platte in Längsrichtung des Kraftfahrzeuges können die Öffnungen in der zweiten Platte mit den Öffnungen in der ersten Platte zur Deckung gebracht werden, so dass sich in Summe ein maximaler Einlassquerschnitt für die bei Fahrt des Kraftfahrzeuges am Unterboden auftretende Luftströmung ergibt. Durch Verschieben der zweiten Platte derart, dass die Zwischenräume zwischen den Öffnungen der zweiten Platte die Öffnungen in der ersten Platte teilweise oder vollständig überdecken, wird der Einlassquerschnitt des Verkleidungsbauteils verringert oder ein vollständiges Verschließen der Einlassöffnungen erreicht.

Durch das Verkleidungsbauteil wird die Abgasanlage am Unterboden des Kraftfahrzeuges abgedeckt, so dass sich ein im Wesentlichen ebener Unterboden ergibt, wodurch eine Reduzierung des Luftwiderstandsbeiwerts des Kraftfahrzeuges erreicht wird. Die im Wesentlichen ebene Ausgestaltung des Verkleidungsbauteils sorgt hierbei für eine Senkung des c_{w}-Wertes. Die Öffnungen im Verkleidungsbauteil ermöglichen eine Umströmung der Abgasanlage, so dass es während des Betriebs des Kraftfahrzeuges nicht zu einer Überhitzung im Bereich der Abgasanlage kommt. Durch die Möglichkeit, die Öffnungen im Verkleidungsbauteil gegebenenfalls verschließen zu können, wenn kein Kühlbedarf für die Abgasanlage besteht, kann der c_{w}-Wert des Kraftfahrzeuges weiter verringert werden.

Ferner ist in der JP 04-143175 A, deren Figur 2 in der JP 07-215074 A mit geänderten Bezugszahlen wiedergegeben ist, ein Verkleidungsbauteil für den Unterboden eines Kraftfahrzeugs beschrieben, mit zwei in Querrichtung des Kraftfahrzeugs verschiebbaren plattenförmigen Abschnitten, die den Bauraum im Tunnelbereich des Kraftfahrzeugs verschließen bzw. freigeben können. Die plattenförmigen Abschnitte sind in Bezug auf das umgebende Verkleidungsbauteil mit einem geringen Versatz nach unten in Richtung der Fahrbahn angeordnet, parallel zur Ebene des Verkleidungsbauteils. Dieser Höhenversatz ist bedingt durch den Bauraum, den die Elemente zum Verschieben der plattenförmigen Abschnitte benötigen. Die seitlichen Ränder der plattenförmigen Abschnitte sind nach oben gebogen und decken somit den Höhenversatz ab.

Ferner ist aus der DE 101 37 175 A1 ein Verkleidungsteil für den Unterboden eines Kraftfahrzeugs bekannt, mit einer Öffnung, die durch eine Klappe oder durch mehrere Klappen verschließbar ist.

Aufgabe der Erfindung ist es, ein Verkleidungsbauteil für den Unterboden eines Kraftfahrzeugs im Bereich der Abgasanlage bereitzustellen, das einen einfachen und damit kostengünstigen Aufbau bei geringem Eigengewicht aufweist und gleichzeitig eine wirkungsvolle Wärmeabfuhr aus dem Bereich der Abgasanlage gewährleistet.

Diese Aufgabe wird durch ein Kraftfahrzeug mit den Merkmalen des Anspruchs 1 gelöst.

Kerngedanke der Erfindung ist es, das Verkleidungsbauteil als aerodynamisch vorteilhaft geformte Abdeckung auszugestalten, die einen in Richtung der Fahrbahn gegenüber dem Unterboden vorstehenden Abschnitt aufweist. Hierdurch ergibt sich für Abgasanlagen, die bis nahe an die untere Begrenzung des Unterbodens heranreichen oder gegenüber der Kontur des Unterbodens vorstehen, eine aerodynamisch günstig geformte Abdeckung, die einen ausreichenden Abstand zur Abgasanlage herstellt. Durch die "stirnseitige" Anordnung zumindest eines überwiegenden Flächenanteils der Einlassöffnung wird eine wirkungsvolle Durchströmung des abgedeckten Bereichs der Abgasanlage erreicht. Fahrtrichtungsabgewandt befindet sich gegebenenfalls eine Auslassöffnung, um eine mit geringen Strömungsverlusten behaftete Durchströmung des abgedeckten Bereichs der Abgasanlage zu erreichen.

Durch die erfindungsgemäße Lösung wird eine aerodynamisch günstig geformte Abdeckung bereitgestellt, die eine glattflächige Umströmung des Unterbodens bei Fahrt des Kraftfahrzeuges ergibt. Durch die erreichte "Kapselung" der Abgasanlage wird eine Reduzierung des Außengeräusches erreicht. Infolge der Kapselung kann die Wärmestrahlung der Abgasanlage bei abgestellter Verbrennungskraftmaschine nur bedingt nach außen dringen, so dass durch diesen Wärmeerhalt die Betriebstemperatur der Verbrennungskraftmaschine und seiner Abgasanlage für einen nachfolgenden Wiederstart im Vergleich zu konventionellen Kraftfahrzeugen über einen längeren Zeitraum gehalten werden kann. Hierdurch wird die Anzahl an Kaltstarts verringert, mit dem Vorteil eines geringeren Verschleißes der Motorbauteile sowie einer Reduzierung der Emissionen der Verbrennungskraftmaschine. Gleichzeitig dient das Verkleidungsbauteil als Schutz der Abgasanlage vor Steinschlag im hierdurch abgedeckten Bereich. Außerdem kann das Verkleidungsbauteil auch als Schutz vor Beschädigung bei Bordsteinabfahrt ausgelegt sein.

Ein unzulässig großer Wärmestau wird durch die wenigstens eine Einlassöffnung und gegebenenfalls durch die wenigstens eine Auslassöffnung erreicht. Die Einlassöffnung ist erfindungsgemäß im fahrtrichtungszugewandten vorderen Abschnitt des Verkleidungsbauteils platziert, so dass der Luftstrom am Unterboden mit geringen Strömungsverlusten und mit einem großen Volumenstrom frontal in den abgedeckten Bereich der Abgasanlage eintreten kann.

Durch die erfindungsgemäße Wölbung des Verkleidungsbauteils nach unten - entsprechend der Kontur und/oder dem Verlauf der Abgasanlage - wird ein ausreichend großer Abstand des Verkleidungsbauteils zur Abgasanlage erreicht, um bei entsprechender Hitzeentwicklung der Abgasanlage eine Überhitzung der Komponenten in diesem Bereich zu verhindern und einen ausreichend großen Zwischenraum zur Umströmung mit Kühlluft zur Verfügung zu stellen.

Zwar ist aus der DE 10 2007 022 298 A1 ein Verkleidungsbauteil für den Unterboden eines Kraftfahrzeuges bekannt, das ein zu kühlendes Aggregat in Form einer Antriebsmaschine mit einem daran befestigten Getriebe abdeckt. Das Verkleidungsbauteil weist eine Einlassöffnung auf, die durch ein angetriebenes Verschlusselement teilweise oder vollständig verschließbar ist, in Abhängigkeit vom Betriebszustand des Aggregats und/oder der Fahrgeschwindigkeit des Kraftfahrzeuges. Das bekannte Verkleidungsbauteil ist jedoch nicht zur Abdeckung des Bereichs unterhalb einer Abgasanlage ausgelegt. Außerdem befindet sich die Einlassöffnung des bekannten Verkleidungsbauteils nicht in aerodynamisch vorteilhafter Weise an der "Stirnseite" des Verkleidungsbauteils, sondern ist als Öffnung in einem ansonsten ebenen Unterboden des Kraftfahrzeuges ausgebildet.

Gemäß der Erfindung folgt die nach unten gerichtete Ausbuchtung des Verkleidungsbauteils der Längsrichtung der Abgasanlage zumindest entlang eines Teils ihrer Längserstreckung. Durch dieses der Form und dem Verlauf der Abgasanlage nachgebildete Verkleidungsbauteil wird auf einer größeren Länge der Abgasanlage eine aerodynamisch und thermisch vorteilhafte Abdeckung realisiert.

Eine Veränderung der Kühlluftmenge im Bereich der Abgasanlage erfolgt durch ein zumindest teilweises Öffnen bzw. Schließen der Einlassöffnung des Verkleidungsbauteiles.

Dies kann beispielsweise durch eine Klappe an der Einlassöffnung erfolgen. Die Klappe ist beispielsweise als Schwenkklappe mit einer etwa mittig angeordneten Schwenkachse ausgebildet, die durch Fremdkraft verstellbar ist, beispielsweise durch eine elektromotorische, elektromagnetische, pneumatische oder hydraulische Stelleinheit. Die Schwenkachse der Klappe kann zum Beispiel - bezogen auf die Einbaulage des Verkleidungsbauteils im Kraftfahrzeug - etwa in Fahrzeugquerrichtung verlaufen und ist hierbei zum vorderen und zum hinteren Endbereich der Klappe beabstandet.

Alternativ kann eine selbsttätig unter der Einwirkung der Unterbodenströmung öffnende Klappe vorgesehen sein, nachfolgend als "Staudruckklappe" bezeichnet. Bei Staudruckklappen befindet sich die Schwenkachse an einem Randabschnitt der Klappe. Hierdurch entsteht ein einarmiger Hebel für den Angriff der Unterbodenströmung. Die Schließlage der Staudruckklappe wird durch deren Gewichtskraft und/oder durch Beaufschlagung mit einer Federvorspannung erzeugt. Die Klappe kann zum Beispiel über eine - bezogen auf die Einbaulage des Verkleidungsbauteils im Kraftfahrzeug - etwa in Fahrzeugquerrichtung verlaufende Schwenkachse am oberen Endbereich der Klappe verschwenkbar sein.

In weiterer Ausgestaltung der Erfindung kann anstelle einer verstellbaren Klappe die Einlassöffnung so ausgebildet sein, dass sich das zumindest teilweise Verschließen der Einlassöffnung aus der Überlappung der einzelnen Wandbereiche der Einlassöffnung in einer horizontalen Ebene ergibt - bezogen auf die Einbaulage des Verkleidungsbauteils im Kraftfahrzeug. Hierbei stellt sich infolge der labyrinthartigen Ausgestaltung der Einlassöffnung bei stehendem Kraftfahrzeug (und bei sehr langsamer Fahrt des Kraftfahrzeugs) keine nennenswerte Luftströmung im Zwischenraum zwischen Abgasanlage und Verkleidungsbauteil ein. Bei Fahrt des Kraftfahrzeugs hingegen bildet sich eine Luftströmung im Bereich der Einlassöffnung und im Zwischenraum aus, die mit zunehmender Fahrtgeschwindigkeit zunimmt.

In allen Betriebszuständen des Kraftfahrzeugs bzw. der Abgasanlage, bei denen der Querschnitt der Einlassöffnung reduziert werden kann, ergeben sich durch diesen erhöhten Schließgrad eine Verbesserung der Außenakustik und eine aerodynamische Optimierung. Auch die labyrinthartigen Ausgestaltung der Einlassöffnung wirkt sich akustisch vorteilhaft aus. Die aerodynamischen Vorteile dieser Ausführungsform ergeben sich aus den strömungsgünstig gestalteten übereinander liegenden Wandbereichen.

In weiterer Ausgestaltung der Erfindung weist das Verkleidungsbauteil an seiner der Fahrbahn zugewandten Unterseite eine kiemenartige oder lamellenartige Ausprägung auf. Hierzu ist eine Mehrzahl von in Fahrtrichtung des Kraftfahrzeuges hintereinander angeordneten Öffnungen, vorzugsweise in Querrichtung des Kraftfahrzeuges verlaufenden schlitzförmigen Öffnungen, vorgesehen. Durch diese Öffnungen erfolgt eine selbsttätige Be- und Entlüftung des Bereiches der Abgasanlage, wobei die lamellenartigen Stellelemente eine Veränderung der Einlass- bzw. Auslassquerschnitte ermöglichen.

In der Ruheposition befinden sich die lamellenartigen Stellelemente im Wesentlichen in der Fläche des Verkleidungsbauteils, so dass sich insgesamt eine glattflächige Abdeckung ergibt, ohne Öffnungen, mit einer signifikanten Reduzierung des Luftwiderstandsbeiwertes. Bei einem sich ergebenden Kühlbedarf können die lamellenartigen Stellelemente des Verkleidungsbauteils derart in eine Wirkstellung verstellt werden, dass sich an der Unterseite des Kraftfahrzeuges im Bereich der Abgasanlage eine Mehrzahl von Öffnungen ergibt, durch die erwärmte Luft aus dem Bereich der Abgasanlage entweichen kann.

Auch bei dieser erfindungsgemäßen Ausgestaltung kann der Wärmehaushalt im Bereich der Abgasanlage so reguliert werden, dass nach dem Abschalten der Verbrennungskraftmaschine die Öffnungen im Verkleidungsbauteil geschlossen werden bzw. geschlossen bleiben, um hiermit eine Speicherung der thermischen Energie zu erreichen, so dass bei einem nachfolgenden Start des Kraftfahrzeuges die Betriebstemperatur wieder schneller erreicht wird. Somit kann die Warmlaufphase für die Verbrennungskraftmaschine des Kraftfahrzeuges verkürzt werden, wodurch sich eine Senkung der Emissionen ergibt.

Zwar sind aus der EP 1 514 772 A1 kiemenförmig ausgebildete Absaugvorrichtungen zum Abführen der im darüber liegenden Raum befindlichen erwärmten Luft in Richtung der Fahrbahn bekannt. Diese bekannte Absaugöffnung ist in Abstand zu einer separaten Belüftungsöffnung vorgesehen. Eine Verstellung der Öffnung der bekannten Absaugvorrichtung ist nicht vorgesehen.

Auch die DE 10 2006 026 098 A1 betrifft ein Verkleidungsbauteil in Form einer Luftleitvorrichtung, an der Absaugkiemen vorgesehen sind, durch die warme und langsam strömende Motorabluft vom Motorraum zur Fahrbahn hin abgeführt wird. Eine Verstellung der Absaugkiemen ist nicht vorgesehen.

Die Verstellung der Klappe bzw. der lamellenartigen Stellelemente kann gemäß Anspruch 12 in Abhängigkeit vom Betriebszustand des Kraftfahrzeuges und/oder dem Betriebszustand der Verbrennungskraftmaschine und/oder vom Zustand der Abgasanlage erfolgen. Hierdurch kann die Umströmung der Abgasanlage bedarfsspezifisch gesteuert oder geregelt werden. Eine besonders einfach zu erfassende Stellgröße ergibt sich durch Messung der Temperatur an wenigstens einer Komponente der Abgasanlage.

Gemäß Anspruch 13 weist das Kraftfahrzeug einen Partikelfilter (für aus Dieselkraftstoff entstehende Rußpartikel) auf, der in größeren Zeitabständen durch besonders hohe Betriebstemperaturen gereinigt wird. Dieses "Freibrennen" erfolgt durch eine entsprechende Dosierung der Kraftstoffmenge und kann gemäß der Erfindung unterstützt werden, indem die Abgasanlage zumindest im Bereich des Partikelfilters durch Verschließen der Einlassöffnung(en) am Verkleidungsbauteil thermisch gekapselt wird, um das Erreichen der gewünscht hohen Betriebstemperatur zu unterstützen.

Die fahrzeugspezifisch optimierte Geometrie des Verkleidungsbauteils kann durch rechnerische Simulation und/oder praktisch durchgeführte Versuchsreihen ermittelt werden.

Vorteilhafte Ausgestaltungen der Erfindung sind Gegenstand der Unteransprüche.

Mögliche Ausführungsbeispiele der Erfindung sind in der Zeichnung dargestellt und werden nachfolgend näher erläutert. Es zeigt:
- Fig. 1: eine perspektivische Ansicht auf den Unterboden eines Kraftfahrzeuges mit einem erfindungsgemäßen Verkleidungsbauteil, etwa in Fahrtrichtung betrachtet,
- Fig. 2: eine perspektivische Ansicht aus einem seitlichen Blickwinkel auf ein erfindungsgemäßes Verkleidungsbauteil und
- Fig. 3 bis 12: schematische Längsschnitte von Kraftfahrzeugen mit erfindungsgemäßen Verkleidungsbauteilen.

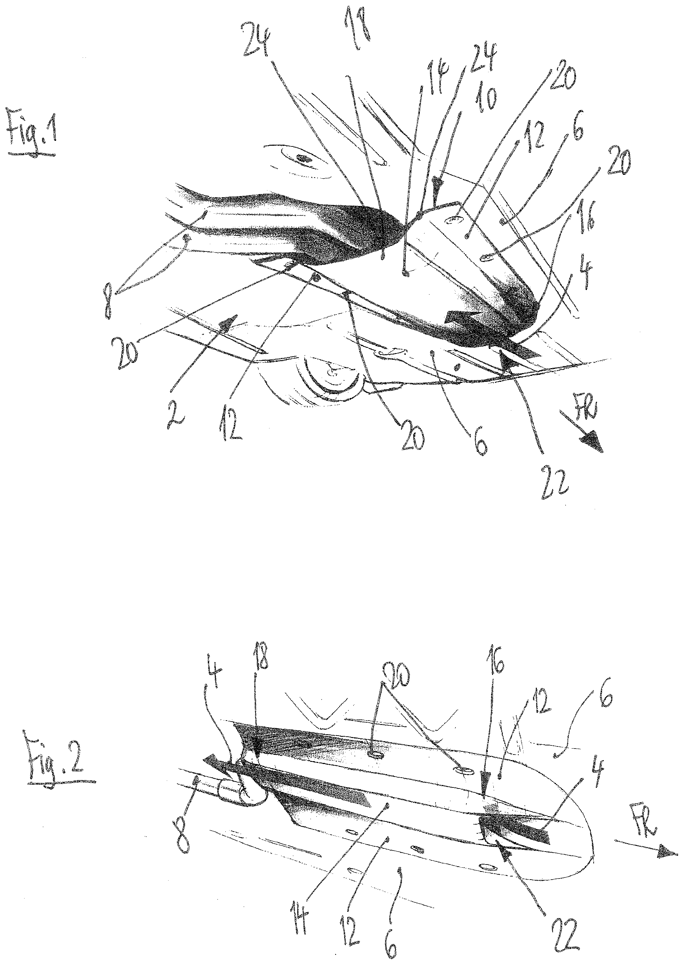

Fig. 1 zeigt einen in seiner Gesamtheit mit 2 bezeichneten Unterboden eines Kraftfahrzeuges. Die Fahrtrichtung ist mit FR angegeben. Während der Fahrt des Kraftfahrzeuges stellt sich entlang des Unterbodens 2 eine Luftströmung ein, die durch den Pfeil 4 dargestellt ist. Der Unterboden 2 des Kraftfahrzeuges ist in weiten Bereichen durch eine Unterbodenverkleidung 6 abgedeckt. Diese Unterbodenverkleidung 6 verschließt mit ihrem vorderen Abschnitt den Motorraum des Kraftfahrzeuges. Von dem durch die Unterbodenverkleidung 6 abgedeckten Antriebsaggregat, das als Verbrennungskraftmaschine ausgeführt ist, verlaufen zwei Abgasleitungen 8 einer ansonsten nicht weiter dargestellten Abgasanlage zum Heck des Kraftfahrzeugs. Ein Teilbereich der beiden Abgasleitungen 8 ist durch ein erfindungsgemäßes Verkleidungsbauteil 10 abgedeckt.

Das Verkleidungsbauteil 10 ist in aerodynamisch günstiger Weise geformt und weist seitliche Abschnitte 12 sowie einen gegenüber dem umgebenden Unterboden 2 nach unten vorstehenden Teilbereich in Form eines erhabenen Mittenabschnitts14 auf. Des Weiteren sind in den Fig. 1 und 2 ein fahrtrichtungszugewandter (vorderer) Abschnitt 16 sowie ein fahrtrichtungsabgewandter (hinterer) Abschnitt 18 des Verkleidungsbauteils 10 bezeichnet. Das Verkleidungsbauteil 10 ist beispielsweise über Schraubverbindungen 20 entlang seiner seitlichen Abschnitte 12 mit der Unterbodenverkleidung 6 verbunden. Der erhabene Mittenabschnitt 14 befindet sich unmittelbar benachbart zu den beiden Abgasleitungen 8 und gewährleistet durch die Ausbuchtung nach unten einen ausreichenden Abstand zu den beiden Abgasleitungen 8. Im vorderen Abschnitt 16 befindet sich eine Einlassöffnung 22. Der hintere Abschnitt 18 des Verkleidungsbauteils 10 hat einen offenen Rand 24. Damit hat das Verkleidungsbauteil 10 die Form einer langgestreckten und rückseitig offenen Haube.

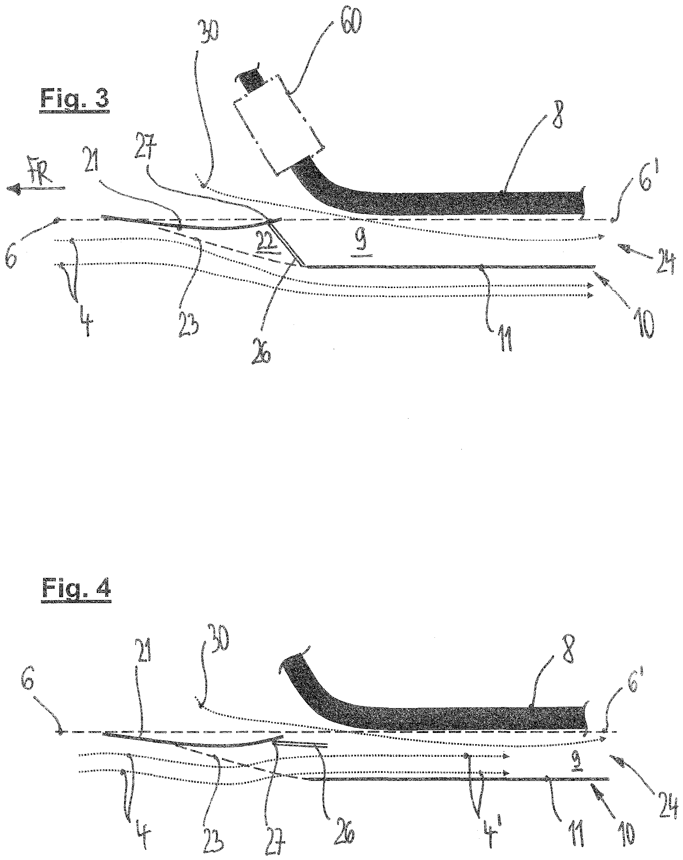

Fig. 2 zeigt ein erfindungsgemäßes Verkleidungsbauteil 10 einer Abgasanlage, das einen Abschnitt einer Abgasleitung 8 überdeckt. Hierbei sind der Fig. 1 entsprechende Bauteile mit denselben Bezugszahlen wie in Fig. 1 bezeichnet. Die Einlassöffnung 22 des Verkleidungsbauteils 10 ist in Form einer Rampe ausgebildet. Die Luftströmung, symbolisiert durch den Pfeil 4, strömt bei Fahrt des Kraftfahrzeuges in aerodynamisch günstiger Weise entlang der Rampengeometrie in den Zwischenraum 9 (siehe Fig. 3 bis 12) zwischen dem Unterboden 2 des Kraftfahrzeuges und dem Verkleidungsbauteil 10 ein und kühlt die Abgasanlage, hier dargestellt durch eine einzelne Abgasleitung 8, entlang ihres Verlaufes. Im Bereich der Einlassöffnung 22 kann eine Klappe vorgesehen sein, wie aus den Darstellungen der Fig. 3 bis 10 näher hervorgeht.

Gemäß dem Ausführungsbeispiel der Fig. 3 und 4 ist am Verkleidungsbauteil 10 im Bereich der Einlassöffnung 22 eine Klappe 26 in Form einer so genannten "Staudruckklappe" vorgesehen. Das Verkleidungsbauteil 10 ist auf die Unterbodenverkleidung 6 aufgesetzt und hat eine zur Ebene 6' der Unterbodenverkleidung 6 beabstandete Unterfläche 11, so dass sich zwischen der Abgasanlage 8 und dem Verkleidungsbauteil 10 ein Zwischenraum 9 ergibt. Die Einlassöffnung 22 ist nach Art einer Rampe strömungsgünstig gestaltet und wird durch eine obere Wandung 21 sowie Seitenwände 23 begrenzt. Die Staudruckklappe 26 verschließt die Einlassöffnung 22 selbsttätig bei Stillstand oder langsamer Fahrt des Kraftfahrzeugs (Fig. 3), bewirkt bei schnellerer Fahrt des Kraftfahrzeuges jedoch durch den Staudruck infolge der Unterbodenumströmung 4 ein Öffnen des Einlassquerschnittes an der Einlassöffnung 22 (Fig. 4).

Die Klappe 26 ist über eine Schwenkachse 27 an einem ihrer Randabschnitte, hier dem vorderen oben liegenden Endabschnitt, schwenkbar gelagert. Durch diese außermittige Lagerung der Klappe 26 ergibt sich für die Luftströmung 4 ein Flächenschwerpunkt mit einem ausreichend großen Hebelarm, so dass sich bei entsprechend schneller Fahrt des Kraftfahrzeugs ein Öffnungsmoment aufbaut, das das Schließmoment aus der Gewichtskraft der Klappe 26 übersteigt und ein zumindest teilweises Öffnen des Querschnitts der Einlassöffnung 22 bewirkt.

Während bei verschlossener Einlassöffnung 22 (Fig. 3) nur die aus dem Motorraum strömende Luft gemäß dem Pfeil 30 entlang der Abgasanlage 8 strömt, gelangt bei geöffneter Einlassöffnung 22 (Fig. 4) auch Luft aus der Unterbodenströmung 4 in den Zwischenraum 9 zwischen Abgasanlage 8 und Verkleidungsbauteil 10, dargestellt durch die Pfeile 4'. Da die Luft der Unterbodenströmung 4 bei den meisten Betriebszuständen des Kraftfahrzeugs eine niedrigere Temperatur hat als die Luft aus dem Motorraum, wird hierdurch die Kühlung der Abgasanlage 8 verbessert. Wenn die Geschwindigkeit der Unterbodenströmung 4 größer ist als die Geschwindigkeit der Luftströmung 30 aus dem Motorraum, stellt sich zudem ein Mitnahmeeffekt ein, durch den die Luft 30 aus dem Motorraum mitgerissen und hierdurch beschleunigt wird, wodurch sich die Kühlwirkung weiter verbessert. Der rückseitige Endabschnitt 24 des Verkleidungsbauteils 10 ist als Öffnung des Verkleidungsbauteils 10 ausgebildet. Hier tritt die nach dem Entlangstreifen an der Abgasanlage 8 erwärmte Luft 4' und 30 aus.

Abweichend vom oben beschriebenen Ausführungsbeispiel einer "Staudruckklappe" kann die Klappe 26 auch durch eine Antriebseinheit mittels Fremdkraft bewegt werden. Hierdurch ist es in Verbindung mit einer Steuerungs- oder Regelungseinheit möglich, die Durchströmungsverhältnisse im Bereich der Abgasanlage 8 unabhängig von der Fahrtgeschwindigkeit des Kraftfahrzeugs zu beeinflussen. Auch im Stillstand des Kraftfahrzeugs kann durch das Öffnen der Klappe 26 und dem damit ermöglichten Eintritt kühlerer Umgebungsluft eine Kühlung der Abgasanlage 8 erreicht werden.

In Fig. 3 ist ein mit 60 bezeichneter Partikelfilter mittels strichpunktierter Linien schematisch dargestellt. Der Partikelfilter 60 ist motornah im vorderen Bereich der Abgasanlage 8 angeordnet. Um den Partikelfilter 60 periodisch zu reinigen, wird die Temperatur im Inneren des Partikelfilters 60 über das Motormanagement gezielt erhöht. Dieser Vorgang kann durch Verschließen einer motorisch verstellbaren Klappe 26 unterstützt werden.

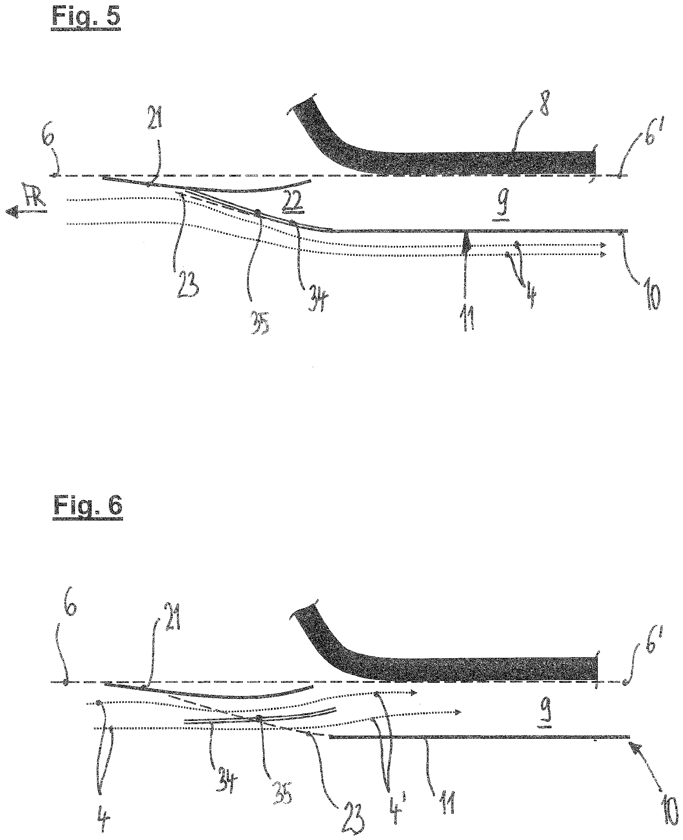

In den Fig. 5 bis 12 sind weitere Ausführungsbeispiele der Erfindung dargestellt, in den gleichen schematischen Schnittdarstellungen wie in den Fig. 3 und 4. Hierbei sind gleiche und gleichwirkende Bauteile mit denselben Bezugszahlen bezeichnet wie in den vorangegangenen Figuren.

Die Fig. 5 und 6 betreffen ein Ausführungsbeispiel der Erfindung mit einer Klappe 34 mit einer etwa mittig angeordneten Schwenkachse 35. Die Klappe 34 eignet sich demzufolge nicht als "Staudruckklappe". Vielmehr wird die Klappe 34 durch einen Fremdkraftantrieb bewegt. In Verbindung mit einer Steuerungs- oder Regelungseinheit kann die Klappe 34 somit individuell angesteuert werden. Hinsichtlich der Luftströmungen 4 und 4' sowie 30 (nicht dargestellt) gilt das oben zu den Fig. 3 und 4 Ausgeführte analog. Die Klappe 34 ist aerodynamisch konturiert und hat im einen dem Verlauf der oberen Wandung 21 angepassten Verlauf im Längsschnitt, wodurch sich verbesserte Luftleiteigenschaften ergeben.

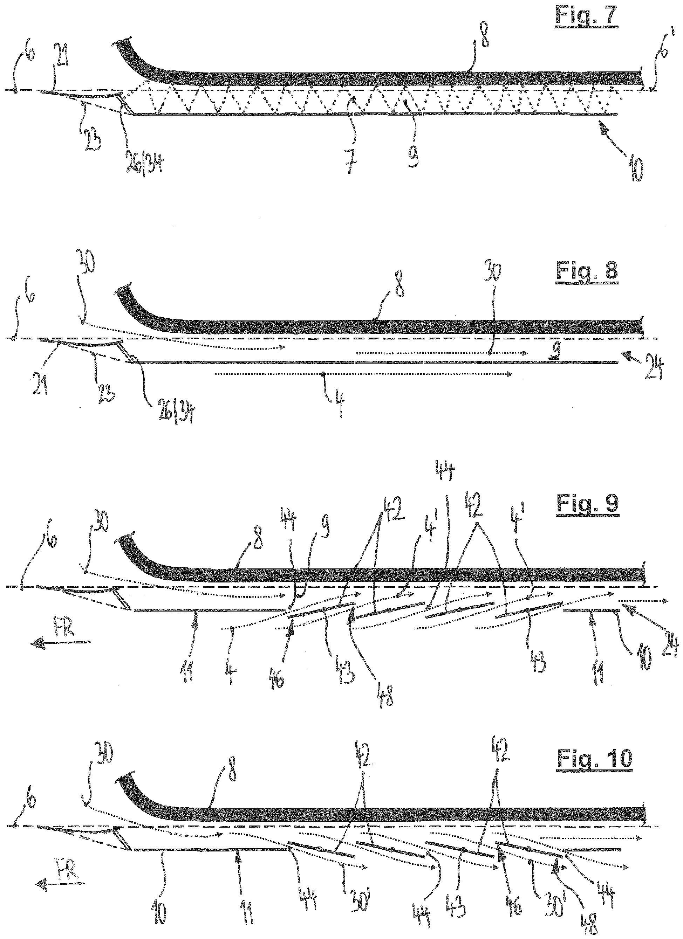

Die Fig. 7 bis 10 zeigen eine weitere Ausführung der Erfindung, bei der zusätzlich oder alternativ zu einer Klappe 26 bzw. 34 an der etwa horizontal verlaufenden Unterfläche 11 des Verkleidungsbauteils 10 mehrere lamellenartige Stellelemente 42 vorgesehen sind. Die Stellelemente 42 haben etwa mittig angeordnete Schwenkachsen 43 und sind durch einen Fremdkraftantrieb verstellbar.
Die Fig. 7 und 8 stellen die Ruheposition der Stellelemente 42 dar, in der die Stellelemente 42 etwa in der Ebene der Unterfläche 11 des Verkleidungsbauteils 10 liegen, so dass die Unterfläche 11 eine geschlossene Fläche ohne Lufteintritts- oder Luftaustrittsöffnungen bildet.

In den beiden Wirkstellungen der Stellelemente 42 gemäß den Fig. 9 und 10 sind diese so verschwenkt, dass sich an der Unterfläche 11 des Verkleidungsbauteils 10 kiemenartige Öffnungen 44 zwischen den einzelnen Stellelementen 42 ergeben. Abweichend von der Darstellung der Fig. 9 und 10 können zwischen den einzelnen lamellenartigen Stellelementen 42 auch feststehende Stege des Verkleidungsbauteils 10 vorgesehen sein.

In Fig. 7 ist die Ruheposition der Stellelemente 42 bei stehendem Kraftfahrzeug dargestellt, nach vorangegangenem Betrieb des Kraftfahrzeugs und somit aufgeheizter Abgasanlage 8. Der Zwischenraum 9 zwischen der Abgasanlage 8 und der Unterfläche 11 des Verkleidungsbauteils 10 ist - mit Ausnahme der rückseitigen Öffnung 24 - geschlossen, so dass durch diese Kapselung der Abgasanlage 8 die Abkühlung der Abgasanlage 8 verlangsamt wird. Der Wärmeerhalt wird durch Reflexionen der Wärmestrahlung 7 an der Innenseite der Unterfläche 11 des Verkleidungsbauteils 10 verbessert.

Diese zu Fig. 7 erläuterte Reflexionswirkung tritt auch bei Fahrt des Kraftfahrzeugs auf, wirkt sich jedoch vor allem bei Stillstand des Kraftfahrzeugs maßgeblich aus. Die beschriebene Reflexionswirkung an der Innenseite des Verkleidungsbauteils 10 ergibt sich auch bei den anderen in Zusammenhang mit der Erfindung beschriebenen Ausführungsformen.

In der Ruheposition der Stellelemente 42 gemäß Fig. 8, bei Fahrt des Kraftfahrzeugs, bewirkt lediglich die aus dem Motorraum einströmende Luft 30 eine Kühlung der Abgasanlage 8. Hierdurch wird beispielsweise in der Anfangsphase der Inbetriebnahme des Kraftfahrzeugs eine schnelle Erwärmung der Abgasanlage 8 erreicht, um zum Beispiel einen der Abgasreinigung dienenden Katalysator schneller auf Betriebstemperatur zu bringen. Im Übrigen wirkt das Verkleidungsbauteil 10 mit geschlossenen Stellelementen 42 wie in Zusammenhang mit den Fig. 3 und 5 erläutert.

In einer ersten Wirkstellung der Stellelemente 42 gemäß Fig. 9 liegen die vorderen Kanten 46 der Stellelemente 42 tiefer als deren hintere Kanten 48 und bilden eine "Einlass-Stellung". Durch diese Konstellation ergeben sich kiemenförmige Öffnungen 44, durch die bei Fahrt des Kraftfahrzeugs Luft aus der Unterbodenumströmung 4 in den Zwischenraum 9 geleitet wird. Die Stellelemente 42 schließen in ihrer Wirkstellung einen spitzen Winkel zur Fahrtrichtung ein. Bevorzugt beträgt der Winkel etwa zwischen 10° und 30°. Bei Stillstand oder langsamer Fahrt des Kraftfahrzeugs kann durch die Öffnungen Warmluft 30 aus dem Motorraum und aus dem Zwischenraum 9 im Bereich der Abgasanlage 8 in Richtung der Fahrbahn abströmen.

In einer zweiten Wirkstellung der Stellelemente 42 gemäß Fig. 10 liegen die vorderen Kanten 46 der Stellelemente 42 höher als deren hintere Kanten 48 und bilden eine "Auslass-Stellung". Durch diese Konstellation ergeben sich wiederum kiemenförmige Öffnungen 44, durch die die Warmluft 30 aus dem Motorraum und aus dem Zwischenraum 9 im Bereich der Abgasanlage 8 in Richtung der Fahrbahn gemäß den Pfeilen 30' abströmen kann. Hierdurch stellt sich bei Stillstand und bei Fahrt des Kraftfahrzeuges eine selbsttätige Entlüftung und Wärmeabfuhr aus dem Zwischenraum 9 ein. Die Stellelemente 42 schließen in ihrer Wirkstellung einen spitzen Winkel zur Fahrtrichtung ein. Bevorzugt beträgt der Winkel etwa zwischen 10° und 30°, wobei der Winkel in der "Auslass-Stellung" tendenziell etwas größer gewählt wird als der Winkel in der "Einlass-Stellung".

Bei stehendem oder abgestelltem Kraftfahrzeug (Fig. 7) wird durch die verschlossenen lamellenartigen Stellelemente 42 eine thermische Kapselung der Abgasanlage 8 erreicht. Hierdurch wird bei stillstehendem Kraftfahrzeug ein Wärmeerhalt im Zwischenraum 9 erreicht, der insbesondere bei einer längeren Betriebspause des Kraftfahrzeugs bei Wiederinbetriebnahme die Warmlaufphase verkürzt und hiermit zu einer Reduktion der Emissionen des Kraftfahrzeuges beiträgt.

Wie aus den Fig. 7 bis 10 hervorgeht, kann zusätzlich zu den Stellelementen 42 eine Klappe 26 (nach Art einer "Staudruckklappe") oder - nicht dargestellt - eine ausschließlich durch Fremdkraft verstellbare Klappe 34 vorgesehen sein, um insbesondere bei bewegtem Kraftfahrzeug die Durchströmung des Zwischenraums 9 zu verbessern.

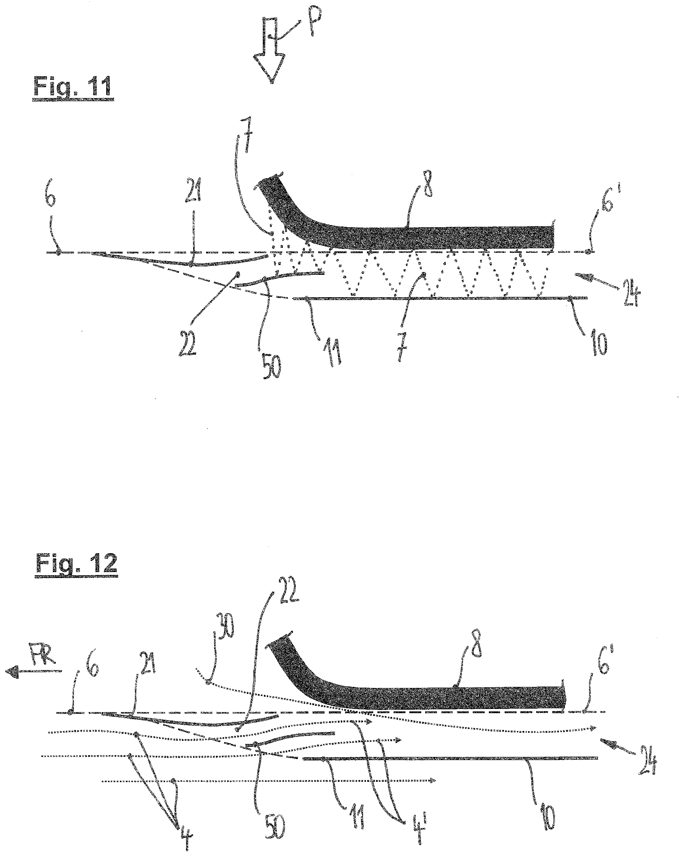

Die Fig. 11 und 12 zeigen eine weitere Ausführungsform der Erfindung, bei der sich im Bereich der Einlassöffnung 22 wenigstens ein feststehendes, nicht verstellbares Luftleitelement 50 befindet. Das Luftleitelement 50 erstreckt sich - in Längsrichtung des Kraftfahrzeugs betrachtet - so, dass es die obere Wandung 21 und die Unterfläche 11 des Verkleidungsbauteils 10 im Bereich der Einlassöffnung 22 überlappt. Somit ergibt sich in einer lotrechten Projektion des Bereichs der Einlassöffnung 22 gemäß dem Pfeil P eine Überdeckung und damit quasi ein Verschließen der Einlassöffnung 22.

Durch diese Überdeckung wird bei stehendem Kraftfahrzeug (Fig. 11) ein labyrinthartiger Verschluss geschaffen, der die Einlassöffnung 22 gegenüber einem Austritt der erwärmten Luft aus dem Zwischenraum 9 abschottet. Sowohl im Bereich der Einlassöffnung 22 als auch im Zwischenraum 9 finden die oben beschriebenen Wärmereflexionen 7 statt.

Bei bewegtem Kraftfahrzeug (Fig. 12) wirkt das Luftleitelement 50 als Luftleitfläche und kanalisiert die Unterbodenströmung 4 derart, dass analog zu den geöffneten Klappen 26 und 34 eine wirksame Durchströmung des Zwischenraums 9 erfolgt.

Die Erfindung lässt sich wie folgt zusammenfassen: Ein erfindungsgemäßes Verkleidungsbauteil 10 für den Unterboden 2 eines Kraftfahrzeuges ist im Bereich unterhalb einer Komponente 8 der Abgasanlage angeordnet. Das Verkleidungsbauteil 10 weist wenigstens eine Einlassöffnung 22 für den Luftstrom 4 auf, der sich bei Fahrt des Kraftfahrzeuges entlang des Unterbodens 2 einstellt. Das Verkleidungsbauteil 10 steht in seinem Mittenabschnitt 14 gegenüber dem umgebenden Unterboden 2 vor und gewährleistet somit einen ausreichenden Abstand zur darüber liegenden Abgasanlage 8. Am vorderen Abschnitt 16 des Verkleidungsbauteils 10 ist zur Kühlung der Abgasanlage 8 eine Einlassöffnung 22 für die Unterbodenströmung 4 vorgesehen. Die Einlassöffnung 22 kann durch eine Klappe 34 und/oder durch eine labyrinthartige Luftführung 21/50/11 ganz oder teilweise verschlossen werden. In einer weiteren Ausgestaltung der Erfindung sind an der Unterseite des Verkleidungsbauteils 10 mehrere Öffnungen 44 vorgesehen, die nach Art von Kiemen oder Lamellen eine Wärmeabfuhr aus dem Zwischenraum zwischen Abgasanlage 8 und Verkleidungsbauteil 10 ermöglichen.

## Patentansprüche

1. Kraftfahrzeug mit einer Verbrennungskraftmaschine und einer Abgasanlage, mit einem Verkleidungsbauteil für den Unterboden des Kraftfahrzeugs zur Anordnung im Bereich unterhalb einer Komponente der Abgasanlage, mit wenigstens einer Einlassöffnung für einen Luftstrom, der sich bei Fahrt des Kraftfahrzeugs am Unterboden einstellt,
**dadurch gekennzeichnet, dass** das Verkleidungsbauteil (10) - bezogen auf die Einbaulage des Verkleidungsbauteils (10) im Kraftfahrzeug - zumindest in einem Teilbereich (14) seiner Breitenerstreckung gegenüber dem umgebenden Unterboden (2) nach unten vorsteht, wobei sich die Einlassöffnung (22) im Bereich des fahrtrichtungszugewandten Abschnitts (16) des Verkleidungsbauteils (10) befindet, wobei das Verkleidungsbauteil (10) - im Querschnitt betrachtet - eine Ausbuchtung aufweist, die sich in Längsrichtung der Komponente der Abgasanlage (8) erstreckt, so dass der Luftstrom am Unterboden mit geringen Strömungsverlusten und mit einem großen Volumenstrom frontal in den abgedeckten Bereich der Abgasanlage (8) eintreten kann.

2. Kraftfahrzeug nach Anspruch 1,
**dadurch gekennzeichnet, dass** die Einlassöffnung (22) nach Art einer Rampe ausgebildet ist.

3. Kraftfahrzeug nach Anspruch 1 oder 2,
**dadurch gekennzeichnet, dass** die Einlassöffnung (22) zumindest teilweise verschließbar ist.

4. Kraftfahrzeug nach Anspruch 3,
**dadurch gekennzeichnet, dass** die Einlassöffnung (22) mit einer Klappe (26, 34) zumindest teilweise verschließbar ist.

5. Kraftfahrzeug nach Anspruch 4,
**dadurch gekennzeichnet, dass** die Klappe (26) um eine Schwenkachse (27) verschwenkbar ist, die in einem Randbereich der Klappe (26) verläuft.

6. Kraftfahrzeug nach Anspruch 4,
**dadurch gekennzeichnet, dass** die Klappe (34) um eine etwa im Mittenbereich der Klappe (34) verlaufende Schwenkachse (35) verschwenkbar ist.

7. Kraftfahrzeug nach einem der vorangegangenen Ansprüche,
**dadurch gekennzeichnet, dass** die Einlassöffnung (22) mehrere vertikal übereinander angeordnete strömungsführende Wände (21; 50; 11) aufweist, die sich in der Projektion (P) auf eine horizontale Ebene überlappen.

8. Kraftfahrzeug nach einem der vorangegangenen Ansprüche,
**dadurch gekennzeichnet, dass** - bezogen auf die Einbaulage des Verkleidungsbauteils (10) im Kraftfahrzeug - am fahrtrichtungsabgewandten Abschnitt (18) des Verkleidungsbauteils (10) mindestens eine Auslassöffnung (24) vorgesehen ist.

9. Kraftfahrzeug nach einem der vorangegangenen Ansprüche,
**dadurch gekennzeichnet, dass** das Verkleidungsbauteil (10) - bezogen auf die Einbaulage des Verkleidungsbauteils (10) im Kraftfahrzeug - eine Mehrzahl von in Fahrtrichtung (FR) hintereinander angeordneten lamellenartigen Stellelementen (42) aufweist, die jeweils um eine etwa in Fahrzeugquerrichtung verlaufende Schwenkachse (43) verschwenkbar sind, wobei die Stellelemente (42) zwischen einer unter einem spitzen Winkel zur Fahrtrichtung (FR) des Kraftfahrzeugs verlaufenden Wirkstellung, in der die Stellelemente (42) Öffnungen (44) im Verkleidungsbauteil (10) bilden, und einer Ruheposition, in der die Stellelemente (42) am Verkleidungsbauteil (10) eine durchgehende Fläche ohne Öffnungen bilden, verstellbar sind.

10. Kraftfahrzeug nach Anspruch 9,
**dadurch gekennzeichnet, dass** die vorderen Kanten (46) der Stellelemente in ihrer Wirkstellung höher liegen als ihre hinteren Kanten (48).

11. Kraftfahrzeug nach Anspruch 9,
**dadurch gekennzeichnet, dass** die vorderen Kanten (46) der Stellelemente in ihrer Wirkstellung tiefer liegen als ihre hinteren Kanten (48).

12. Kraftfahrzeug nach einem der Ansprüche 4 bis 6 und/oder 9 bis 11, **dadurch gekennzeichnet, dass** eine Steuerungs- oder Regelungseinheit vorgesehen ist, mit der die Klappe (26; 34) und/oder die Stellelemente (42) in Abhängigkeit vom Betriebszustand des Kraftfahrzeugs und/oder vom Betriebszustand der Verbrennungskraftmaschine und/oder von der Temperatur einer Komponente der Abgasanlage (8) mittels einer fremdkrafterzeugenden Antriebseinheit verstellbar ist bzw. sind.

13. Kraftfahrzeug nach einem der Ansprüche 4 bis 6 und/oder 9 bis 11, **dadurch gekennzeichnet, dass** das Verkleidungsbauteil (10) im Bereich eines Partikelfilters (60) der Abgasanlage (8) des Kraftfahrzeugs vorgesehen ist, wobei die Klappe (26; 34) und/oder die Stellelemente (42) zum Zweck einer Erhöhung der Betriebstemperatur des Partikelfilters (60) verschließbar ist bzw. sind.

## Claims

1. A motor vehicle with a combustion engine and an exhaust system, with a trim component for the underbody of the motor vehicle for being arranged in the region beneath a component of the exhaust system, with at least one inlet opening for an airflow which develops on the underbody when the motor vehicle is travelling,
**characterised in that** the trim component (10) - relative to the installation position of the trim component (10) in the motor vehicle - at least in a partial region (14) of its width extent projects downwards relative to the surrounding underbody (2), with the inlet opening (22) being located in the region of that portion (16) of the trim component (10) which faces the direction of travel, with the trim component (10) - viewed in cross-section - having a protrusion which extends in the longitudinal direction of the component of the exhaust system (8), so that the airflow on the underbody can enter frontally into the covered region of the exhaust system (8) with low flow losses and with a large volumetric flow rate.

2. A motor vehicle according to Claim 1,
**characterised in that** the inlet opening (22) is formed in the manner of a ramp.

3. A motor vehicle according to Claim 1 or Claim 2,
**characterised in that** the inlet opening (22) can be at least partially closed.

4. A motor vehicle according to Claim 3,
**characterised in that** the inlet opening (22) can be at least partially closed with a flap (26, 34).

5. A motor vehicle according to Claim 4,
**characterised in that** the flap (26) is pivotable about a pivot pin (27) which runs in an edge region of the flap (26).

6. A motor vehicle according to Claim 4,
**characterised in that** the flap (34) is pivotable about a pivot pin (35) which runs approximately in the middle region of the flap (34).

7. A motor vehicle according to one of the preceding claims,
**characterised in that** the inlet opening (22) has a plurality of flow-guiding walls (21; 50; 11) arranged vertically one above another which overlap in a projection (P) onto a horizontal plane.

8. A motor vehicle according to one of the preceding claims,
**characterised in that** - relative to the installation position of the trim component (10) in the motor vehicle - at least one outlet opening (24) is provided on that portion (18) of the trim component (10) which is remote from the direction of travel.

9. A motor vehicle according to one of the preceding claims,
**characterised in that** the trim component (10) - relative to the installation position of the trim component (10) in the motor vehicle - has a plurality of lamellar adjustment elements (42) arranged in series in the direction of travel (FR), which elements are in each case pivotable about a pivot pin (43) running approximately in the transverse direction of the vehicle, the adjustment elements (42) being adjustable between an active position running at an acute angle to the direction of travel (FR) of the motor vehicle, in which the adjustment elements (42) form openings (44) in the trim component (10), and a rest position, in which the adjustment elements (42) form a continuous surface without openings on the trim component (10).

10. A motor vehicle according to Claim 9,
**characterised in that** the front edges (46) of the adjustment elements in their active position lie higher than their rear edges (48).

11. A motor vehicle according to Claim 9,
**characterised in that** the front edges (46) of the adjustment elements in their active position lie lower than their rear edges (48).

12. A motor vehicle according to one of Claims 4 to 6 and/or 9 to 11,
**characterised in that** a control or regulating unit is provided with which the flap (26; 34) and/or the adjustment elements (42) is or are adjustable by means of a power-generating drive unit as a function of the operating state of the motor vehicle and/or of the operating state of the combustion engine and/or of the temperature of a component of the exhaust system (8).

13. A motor vehicle according to one of Claims 4 to 6 and/or 9 to 11,
**characterised in that** the trim component (10) is provided in the region of a particle filter (60) of the exhaust system (8) of the motor vehicle, the flap (26; 34) and/or the adjustment elements (42) being closable for the purpose of increasing the operating temperature of the particle filter (60).

## Revendications

1. Véhicule automobile équipé d'un moteur à combustion interne et d'une installation de gaz d'échappement, comprenant un élément d'habillage du dessous de caisse de ce véhicule destiné à être monté dans la zone située au-dessous d'un composant de l'installation de gaz d'échappement, et ayant au moins une ouverture d'entrée d'un flux d'air qui s'établit au niveau du dessous de caisse lors du déplacement du véhicule,
**caractérisé en ce que**
l'élément d'habillage (10) s'avance vers le bas, - par rapport à la position de montage de cet élément d'habillage (10) dans le véhicule- au moins dans une zone partielle (14) de son extension en largeur par rapport au dessous de caisse (2) qui l'entoure, l'ouverture d'entrée (22) étant située dans la zone du segment (16) de l'élément d'habillage (10) tourné dans la direction de déplacement, l'élément d'habillage (10) comportant - considéré en section - un bossage qui s'étend dans la direction longitudinale du composant de l'installation de gaz d'échappement (8) de sorte que le flux d'air au niveau du dessous de caisse puisse entrer frontale-ment, dans la zone recouverte de l'installation de gaz d'échappement (8), avec de faibles pertes de flux et un grand débit.

2. Véhicule conforme à la revendication 1,
**caractérisé en ce que**
l'ouverture d'entrée (22) est réalisée sous la forme d'une rampe.

3. Véhicule conforme à la revendication 1 ou 2,
**caractérisé en ce que**
l'ouverture d'entrée (22) peut être fermée au moins partiellement.

4. Véhicule conforme à la revendication 3,
**caractérisé en ce que**
l'ouverture d'entrée (22) peut être fermée au moins partiellement par un volet (26, 34).

5. Véhicule conforme à la revendication 4,
**caractérisé en ce que**
le volet (26) peut pivoter autour d'un axe de pivotement (27) s'étendant dans la zone d'un bord de ce volet (26).

6. Véhicule conforme à la revendication 4,
**caractérisé en ce que**
le volet (34) peut pivoter autour d'un axe de pivotement (35) s'étendant essentiellement dans la zone médiane du volet (34).

7. Véhicule conforme à la revendication 3,
**caractérisé en ce que**
l'ouverture d'entrée (22) comporte plusieurs parois de guidage de flux (21, 50, 11) montées verticalement les unes sur les autres, qui se chevauchent en projection (P) sur un plan horizontal.

8. Véhicule conforme à la revendication 3,
**caractérisé en ce que**
- par rapport à la position de montage de l'élément d'habillage (10) dans le véhicule - au moins une ouverture de sortie (24) est prévue sur le segment (18) de l'élément d'habillage (10) situé à l'opposé de la direction de déplacement.

9. Véhicule automobile conforme à l'une des revendications précédentes,
**caractérisé en ce que**
l'élément d'habillage (10) comporte - par rapport à la position de montage de l'élément d'habillage (10) dans le véhicule - un ensemble d'éléments de réglage (42) en forme de lamelles montés les uns derrière les autres dans la direction de déplacement (FR), et qui sont respectivement mobiles en pivotement autour d'un axe de pivotement (43) s'étendant essentiellement dans la direction transversale du véhicule, les éléments de réglage (42) pouvant être réglés entre une position active dans laquelle ils s'étendent sous un angle aigu par rapport à la direction de déplacement (FR) du véhicule, et forment des ouvertures (44)
dans l'élément d'habillage (10), et une position de repos dans laquelle ils forment sur l'élément d'habillage (10) une surface continue sans ouverture.

10. Véhicule conforme à la revendication 9,
**caractérisé en ce que**
dans la position active, les arêtes avant (46) des éléments de réglage sont plus hautes que leurs arêtes arrières (48).

11. Véhicule automobile conforme à la revendication 9,
**caractérisé en ce que**
dans la position active, les arêtes avant (46) des éléments de réglage sont plus basses que leurs arêtes arrières (48).

12. Véhicule automobile conforme à l'une des revendications 4 à 6 et/ou 9 à 11,
**caractérisé en ce qu'**
il est prévu une unité de commande et de régulation réglant ou permettant de régler au moyen d'une unité d'entraînement produisant une force externe les volets (26, 34) et/ou les éléments de réglage (42) en fonction de l'état de fonctionnement du véhicule et/ou de l'état de fonctionnement du moteur à combustion interne et/ou de la température d'un composant de l'installation de gaz d'échappement (8).

13. Véhicule automobile conforme à l'une des revendications 4 à 6 et/ou 9 à 11,
**caractérisé en ce que**
l'élément d'habillage (10) est situé dans la zone d'un filtre à particules (60) de l'installation de gaz d'échappement (8) du véhicule, le volet (26, 34) et/ou les éléments de réglage (42) pouvant être fermés pour permettre d'augmenter la température de fonctionnement du filtre à particules (60).
